# EUROPÄISCHE PATENTANMELDUNG

(11) **EP 4 358 339 A1**
(43) Veröffentlichungstag der Anmeldung: **24.04.2024**
(21) Anmeldenummer: 23196824.9
(22) Anmeldetag: 12.09.2023
(51) Int. Cl.: H02J 3/36

(54) **HOCHSPANNUNGSGLEICHSTROMÜBERTRAGUNG OHNE DEDIZIERTEN METALLISCHEN RÜCKLEITER**

(30) Priorität: 22.09.2022 DE 102022124364
(71) Anmelder: TenneT TSO GmbH, 95448 Bayreuth (DE)
(72) Erfinder: Rathke, Christian, 31157 Sarstedt (DE); Buchhagen, Christoph, 31275 Lehrte (DE)
(74) Vertreter: Scheffler, Jörg

(57) **Zusammenfassung**

Die Erfindung betrifft ein elektrisches Netzwerk (1), mit einem zur bipolaren Hochspannungsgleichstromübertragung von elektrischer Energie eingerichteten Hochspannungsgleichstromübertragungs-System (2). Das Hochspannungsgleichstromübertragungs-System (2) umfasst dabei wenigstens einen Wechselstromnetzabschnitt (3) und einen mit dem Wechselstromnetzabschnitt (3) elektrisch verbundenen Gleichstromnetzabschnitt (4). Ferner ist das bipolare Hochspannungsgleichstromübertragungs-System (2) mit einem ersten Pol (5) sowie einem zweiten Pol (6) ausgeführt, wobei die Pole (5, 6) über zumindest einen in dem Wechselstromnetzabschnitt (3) ausgeführten Strombegrenzer (7) miteinander elektrisch verbunden sind.

## Beschreibung

Die Erfindung betrifft ein elektrisches Netzwerk mit einem zur bipolaren Hochspannungsgleichstromübertragung von elektrischer Energie eingerichteten Hochspannungsgleichstromübertragungs-System. Hierbei umfasst das Hochspannungsgleichstromübertragungs-System wenigstens einen Wechselstromnetzabschnitt und einen mit dem Wechselstromnetzabschnitt elektrisch verbundenen Gleichstromnetzabschnitt. Ferner ist das bipolare Hochspannungsgleichstromübertragungs-System entsprechend mit einem ersten Pol sowie einem zweiten Pol ausgeführt.

Zur wirtschaftlichen Übertragung von elektrischer Energie über weite bis sehr weite Entfernungen - insbesondere durch Freileitungen über Land - erfolgt der Ausbau der übertragenden elektrischen Netze oder Teilnetze oftmals unter Ausführung einer Hochspannungs-Gleichstrom-Übertragung (HGÜ). Neben Ausführung zur Übertragung über weite bis sehr weite Entfernungen findet eine Ausführung einer HGÜ jedoch bereits auch über kürzere Entfernungen von mehreren 10 Kilometern Anwendung, wenn die übertragenden elektrischen Leiter, wie beispielsweise Erd- oder Seekabel, einen hohen kapazitiven Leitungsbelag aufweisen. So erfolgt auch die Anbindung von Windparks, hier insbesondere von Offshore-Windparks mit an Land ausgeführten elektrischen Netzen unter Ausgestaltung einer HGÜ.

Dabei besteht einerseits die Möglichkeit, die Hochspannungs-Gleichstrom-Übertragung in einer monopolaren Konfiguration auszugestalten, also zur Übertragung lediglich einen elektrischen Leiter und die Erde als Rückleiter zu verwenden. Andererseits ist zur Übertragung ebenso eine bipolare Konfiguration unter Verwendung zweier elektrischer Leiter möglich, wobei zur Umgehung einer asymmetrischen Spannungsverteilung zwischen den beiden Leitern in der Regel eine Erdung des Mittenpotentials erfolgt. Auch wenn dabei nur noch ein im Vergleich zu einer monopolaren Konfiguration geringer Ausgleichstrom über die Erder geführt wird, besteht dennoch das Problem der elektrolytischen Zersetzung wenigstens eines der Erder. Diese in Verbindung mit dem über die Erde fließenden Ausgleichsstrom ist insbesondere bei einem Offshore-Windpark überaus unerwünscht respektive unzulässig.

Um dieses Problem zu adressieren, wird in der Regel zusätzlich zu den beiden Leitern ein dedizierter metallischer Rückleiter (DMR) zwischen den beiden Seiten der HGÜ insbesondere verbunden mit einer einseitigen Erdung ausgeführt.

Beim Auftreten eines Fehlers an einem der Pole, und hierbei insbesondere an einem der Leiter, lässt sich über den DMR zudem der nicht von einem Fehler betroffene Pol in einer monopolaren Konfiguration weiterbetreiben, folglich ohne eine unzulässige Rückleitung über die Erde etablieren zu müssen.

Im Zusammenhang mit dem vorstehenden Auftreten eines Fehlers an einem der Leiter und einem damit verbundenen Fehlerstrom besteht zudem die Notwendigkeit, Überströme zu vermeiden und den betroffenen Pol zu trennen. Dies bedingt, dass der auftretende Fehlerstrom zunächst zumindest in seiner Höhe begrenzt wird.

Hierfür werden im Stand der Technik bereits Lösungen offenbart.

So ist aus der CN 1 10 829 396 A ein elektrisches Netz aus zwei über ein Gleichspannungsnetz verbundenen Wechselstromnetzen unter Ausführung einer hybriden Hochspannungsgleichstromübertragung bekannt, wobei sich die hybride Ausgestaltung durch Verwendung eines netzgeführten Stromrichters, d. h. hierbei eines Line-Commutated-Converters als quellseitiger Gleichrichter, und eines selbstgeführten Stromrichters, d. h. hierbei eines Voltage-Source-Converters als lastseitiger Wechselrichter, ergibt. Zum Minimieren respektive Unterbinden eines im Gleichspannungsnetz auftretenden Fehlerstroms ist jeweils ein- sowie ausgangsseitig einer Übertragungsleitung des Gleichspannungsnetzes ein supraleitender Fehlerstrombegrenzer sowie ein wiederum hybrider Leistungsschalter ausgeführt, wobei in dem hybriden Leistungsschalter mechanische Schalter mit Halbleiterschaltern kombiniert sind.

Die CN 1 08 092 252 A beschreibt zudem ein elektrisches Netz, aufweisend ein Gleichspannungsnetz mit einer Hochspannungsgleichstromübertragung, wobei das Gleichspannungsnetz über mehrere Einspeiseterminals verfügt. Jedes Einspeiseterminal weist dabei einen mit einem Wechselspannungsnetz gekoppelten, selbstgeführten Stromrichter, hier einen Modular-Multi-Level-Converter, auf. Zum Minimieren respektive dem Unterbinden von im Gleichspannungsnetz auftretenden Fehlerströmen ist in einem jeweiligen Zweig zwischen jedem gleichspannungsseitigen Anschluss eines Modular-Multi-Level-Converters und einem zudem in Reihe in dem Zweig installierten Gleichspannungsleistungsschalter ein supraleitender Fehlerstrombegrenzer ausgeführt.

Durch die CN 1 13 629 680 A ist ferner ein Verfahren zur Begrenzung eines Kurzschlussfehlerstroms sowie eine Ausgestaltung eines elektrischen Netzes mit einer Hochspannungs-Gleichstrom-Übertragung unter Verwendung eines Modular-Multi-Level-Converters (MMC) bekannt. Hierbei wird nach dem Auftreten eines Kurzschlussfehlers im elektrischen Netz die Anstiegsgeschwindigkeit und die Höhe des Fehlerstroms vor dem Öffnen der auf der Gleichspannungsseite des MMCs ausgeführten Gleichspannungs-Leistungsschalters begrenzt, um die Sicherheit des elektrischen Netzes zu gewährleisten. Hierfür wird eine aktive Strombegrenzungssteuerung mit einem auf der Gleichspannungsseite des MMCs ausgeführten und mit dem Plus- sowie Minuspol des MMCs verbundenen Fehlerstrombegrenzer auf Basis einer kapazitiven Kommutierung kombiniert, wobei die Begrenzung der Anstiegsgeschwindigkeit über die Strombegrenzungssteuerung und die Begrenzung des Fehlerstroms entsprechend über den Fehlerstrombegrenzer erfolgt.

Der EP 2 901 537 B1 ist ferner ein elektrisches Netzwerk zu entnehmen, wobei zwei Wechselspannungsnetze des elektrischen Netzwerks über eine Hochspannungsgleichstromübertragung verbunden sind. Dabei ist eines der Wechselspannungsnetze als ein seeseitiger Windpark angegeben.

Die DE 10 2011 077 460 A1 beschreibt zudem eine Schutzvorrichtung, welche einen supraleitenden Strombegrenzer, eine in Reihe zu dem supraleitenden Strombegrenzer angeordnete Schalteinrichtung sowie eine Stromerfassungseinrichtung zum Erfassen des durch den supraleitenden Strombegrenzer fließenden elektrischen Stroms aufweist. Zudem verfügt die Schutzeinrichtung über eine Auswerteeinrichtung zum Ermitteln eines die Temperatur des supraleitenden Strombegrenzers wiedergebenden Parameters, welcher dabei auf der Grundlage des mit der Stromerfassungseinrichtung erfassten elektrischen Stroms basiert. Ferner dient die Auswerteeinrichtung dem Veranlassen eines Schaltens der Schalteinrichtung auf der Grundlage des ermittelten Parameters, um den Stromfluss durch den supraleitenden Strombegrenzer zu unterbrechen, um eine Beschädigung des supraleitenden Strombegrenzers zu verhindern.

Aus der DE 10 2017 213 099 A1 geht zudem ein elektrisches Netzwerk mit einer zweipoligen Stromrichtereinheit für eine Hochspannungsgleichstromübertragung hervor. Hierbei ist ein erster Gleichspannungsanschluss des ersten Pols mit einem ersten Leiteranschlusspunkt für einen ersten Hochspannungsgleichstromübertragungs-Leiter verbunden. Ein zweiter Gleichspannungsanschluss des ersten Pols ist ferner unter Ausbildung eines ersten Verbindungspunkts mit einem ersten Gleichspannungsanschluss des zweiten Pols verbunden. Weiterhin ist ein zweiter Gleichspannungsanschluss des zweiten Pols mit einem zweiten Leiteranschlusspunkt für einen zweiten Hochspannungsgleichstromübertragungs-Leiter verbunden. Der dabei einen Mittenanschluss bildende Verbindungspunkt ist zudem mittels eines stromdämpfenden elektrischen Bauelements sowie eines parallelgeschaltenen Gleichstrom-Schalters mit Erdpotential verbunden. Dies trifft auch auf den zweiten Mittenanschluss der Stromrichtereinheit zu, sodass diese eine Erdrückleitung aufweist. Die beiden Pole der Stromrichtereinheit und hierbei im Speziellen die Transformatoren der Stromrichtereinheit sind zudem je wechselspannungsseitig über einen elektrischen Leiter verbunden, über welchen diese mit einem Wechselstrom speisbar sind.

Auch wenn eine Ausführung von Fehlerstrombegrenzern und/oder einem metallischen Rückleiter in einer Hochspannungs-Gleichstrom-Übertragung eine fehlertolerante Lösung darstellt, stehen einer solchen Lösung in nachteiliger Weise die immensen Kosten für die Verwendung eines dedizierten metallischen Rückleiters gegenüber. Dieser weist dabei den gleichen oder einen vergleichbaren Aufbau wie die Leiter selbst auf.

Eine Alternative zur Verwendung eines dedizierten metallischen Rückleiters stellt zudem die Ausführung von Vollbrücken-Konvertern dar. Jedoch sind diese deutlich größer und mit höheren Kosten verbunden als dies bei der Nutzung von Halbbrücken-Konvertern der Fall ist. Bedingt durch den größeren Bauraumbedarf der Vollbrücken-Konverter ist somit auch die Ausführung dieser vor dem Hintergrund begrenzter Raumverhältnisse auf Offshore-Trägerplattformen ökonomisch nicht sinnvoll.

Vor diesem Hintergrund liegt der Erfindung die Aufgabe zugrunde, eine Möglichkeit zu schaffen, ein elektrisches Netzwerk der eingangs genannten Art bereitzustellen, welches eine fehlertolerante Hochspannungsgleichstromübertragung mit verminderten Kosten ermöglicht.

Diese Aufgabe wird erfindungsgemäß mit einem elektrischen Netzwerk gemäß den Merkmalen des Anspruchs 1 gelöst. Die weitere Ausgestaltung der Erfindung ist den Unteransprüchen zu entnehmen.

Erfindungsgemäß ist also ein elektrisches Netzwerk, auch Stromnetz genannt, vorgesehen, welches ein zur bipolaren Hochspannungsgleichstromübertragung sowie der Verteilung von elektrischer Energie eingerichtetes Hochspannungsgleichstromübertragungs(HGÜ)-System aufweist. Dabei umfasst das HGÜ-System wiederum wenigstens einen (Hochspannungs-) Wechselstromnetzabschnitt und einen mit diesem - ersten - Wechselstromnetzabschnitt elektrisch verbundenen (Hochspannungs-)Gleichstromnetzabschnitt des elektrischen Netzwerks respektive weist das HGÜ-System wenigstens einen solchen Wechselstromnetzabschnitt und einen solchen Gleichstromnetzabschnitt auf. Grundsätzlich ist hierbei zwar denkbar, dass lediglich ein Wechselstromnetzabschnitt ausgeführt ist und eine Verteilung der elektrischen Energie direkt über den Gleichstromnetzabschnitt oder über wenigstens einen weiteren Gleichstromnetzabschnitt, z. B. mit einer unterschiedlichen Spannungshöhe, erfolgt. Bevorzugt ist das HGÜ-System jedoch zusätzlich zu dem - ersten - Wechselstromnetzabschnitt mit einem weiteren, insbesondere zweiten Wechselstromnetzabschnitt ausgeführt, wobei die zwei Wechselstromnetzabschnitte über den Gleichstromnetzabschnitt miteinander verbunden sind.

Erfindungsgemäß ist das bipolare HGÜ-System - entsprechend aufgrund der Bipolarität - zudem mit einem ersten Pol sowie einem zweiten Pol ausgeführt. Hierbei würde eine Schnittstelle zwischen dem Wechselspannungsnetzabschnitt respektive den Wechselspannungsnetzabschnitten durch z. B. Hochspannungsgleichstromübertragungs(HGÜ)-Umspannstationen gebildet, wobei je Pol und notwendiger Schnittstelle zwischen jedem Wechselspannungsnetzabschnitt und dem Gleichstromnetzabschnitt eine HGÜ-Umspannstation ausgeführt wäre.

Darüber hinaus sind die Pole erfindungsgemäß über zumindest einen in dem - ersten - Wechselstromnetzabschnitt ausgeführten Strombegrenzer, Kurzschlussstrombegrenzer respektive Fehlerstrombegrenzer miteinander elektrisch verbunden. Durch das Verbinden der beiden Pole des HGÜ-Systems in dem - ersten - Wechselstromnetzabschnitt über den oder die Strombegrenzer lässt sich vorteilhaft ein Potenzialausgleich zwischen den Polen erzielen. Dies ist besonders dann von Vorteil, wenn die Pole von zumindest einem Kraftwerk gespeist werden, wobei das Kraftwerk oder die Kraftwerke eine sich unterscheidende und hierbei insbesondere fluktuierende Bereitstellung von elektrischer Leistung aufweisen.

Das oder die die Pole speisenden Kraftwerke können dabei grundsätzlich auch solche Kraftwerke sein, welche elektrische Energie aus klassischen Energieträgern, d. h. insbesondere chemischen, beispielsweise fossilen oder nuklearen Energieträgern gewinnen. Demnach könnten die Kraftwerke als Kohle-, Erdöl-, Erdgas- und/oder Kernkraftwerk ausgeführt sein. In übergeordneter Bedeutung sind die die Pole speisenden Kraftwerke hingegen jedoch solche Kraftwerke, welche elektrische Energie aus regenerativen Energieträgern wie insbesondere Wind, Sonne und/oder Wasserkraft gewinnen. Bevorzugt wäre ein Kraftwerk somit als Photovoltaikanlage oder besonders bevorzugt als Windkraftanlage ausgebildet. Ein jeweiliger Pol des HGÜ-Systems würde dabei durch zumindest ein Kraftwerk mit einem Strom gespeist werden.

Der zuvor erwähnte Potentialausgleich über den oder die im - ersten - Wechselstromnetzabschnitt zwischen den Polen des HGÜ-Systems ausgeführten Strombegrenzer ließe sich zudem erzielen, ohne dass ein maximal zulässiger Kurzschlussstrom überschritten würde. Der Potentialausgleich führt insbesondere im Gleichstromnetzabschnitt zu einer im Wesentlichen symmetrischen Spannung der Pole gegenüber Null- respektive Erdpotential und somit einem Mittenpotential auf Null- respektive Erdpotential.

Da die gegebenenfalls vorhandene Isolation der einem jeweiligen Pol zugehörigen, stromführenden Leiter, beispielsweise bei Seekabeln, regelmäßig gegen Erdpotential erfolgt, lassen sich somit, insbesondere auch ohne eine Erdung des Mittenpotentials zwischen den Polen, überaus vorteilhaft Schäden an der Isolation aufgrund einer ungleichmäßigen Spannungsaufteilung vermeiden und die Fehlertoleranz respektive die Zuverlässigkeit der Hochspannungsgleichstromübertragung erhöhen. Bei Erdung des Mittenpotentials könnte zudem ein über die Erde fließender Ausgleichsstrom minimal gehalten oder gar vollständig vermieden werden, sodass auch lediglich eine minimale oder gar keine unerwünschte oder unzulässige Zersetzung eines Erders bestehen würde.

Überdies ließen sich eventuelle Kosten durch eine Anpassung der Isolation und/oder durch einen Verzicht auf Erder einsparen.

Die Einsparung von Kosten kann ferner deutlich gesteigert werden. So ist vor diesem Hintergrund in einer überaus vorteilhaften Weiterbildung der Erfindung vorgesehen, dass das HGÜ-System keinen dedizierten metallischen Rückleiter (DMR) aufweist. Die zusätzlichen Kosten für die Ausführung des wenigstens einen Strombegrenzers würden hierbei die Kosten für das Ausführen eines dedizierten metallischen Rückleiters deutlich unterschreiten, sodass in vorteilhafter Weise signifikante Kosteneinsparungen vorlägen.

Eine gewinnbringende Ausbildung des erfindungsgemäßen elektrischen Netzwerks liegt ferner darin, dass im Wechselstromnetzabschnitt des HGÜ-Systems je Pol wenigstens ein - separater oder ein einziger - Wechselstrombus ausgeführt ist, über welchen der jeweilige Pol mit einem Wechselstrom speisbar ist. Der Wechselstrombus wäre dabei mit einer einem jeweiligen Pol zugehörigen HGÜ-Umspannstation direkt oder bevorzugt indirekt über wenigstens einen Transformator elektrisch verbunden. Der Wechselspannungsbus oder die Wechselspannungsbusse, welche einen gemeinsamen Kopplungspunkt ausbilden, können hierbei vorteilhaft dazu dienen, wenigstens zwei, insbesondere jedoch mehrere Netzanschlusspunkte bereitzustellen, über die wiederum wenigstens zwei, insbesondere jedoch mehrere Kraftwerke mit einem jeweiligen Wechselspannungsbus elektrisch verbindbar sind. So lässt sich ein jeweiliger Pol vorteilhaft über eine Mehrzahl an Kraftwerken mit einem Strom, insbesondere einem Wechselstrom, speisen. Grundsätzlich kann hierbei je Netzanschlusspunkt lediglich ein eine Erzeugungseinheit bildendes Kraftwerk mit dem Wechselspannungsbus elektrisch verbunden sein. Es besteht darüber hinaus jedoch bevorzugt die Möglichkeit, dass mehrere zu einer Erzeugungsanlage zusammengefasste Erzeugungseinheiten und somit Kraftwerke an einem - einzigen - Netzanschlusspunkt des Wechselspannungsbusses elektrisch angebunden sind. Die Gesamtheit der über die Netzanschlusspunkte an einen Wechselspannungsbus elektrisch angebundenen Erzeugungseinheiten und/oder Erzeugungsanlagen würden dabei eine Gesamteinrichtung zur Stromerzeugung, d. h. insbesondere einen Strom- respektive Windpark, bilden, dessen Erzeugungsanlagen und/oder Erzeugungseinheiten insbesondere durch gemeinsame Sollwerte gesteuert werden können. Jeder Wechselstrombus kann dabei beispielsweise durch wenigstens eine Sammelschiene ausgebildet sein.

Im Allgemeinen, insbesondere jedoch im Zusammenhang mit der vorstehenden Ausbildung des elektrischen Netzwerks stellt es sich in einer Weiterbildung der Erfindung als vorteilhaft dar, wenn der oder die Strombegrenzer - zur elektrischen Verbindung der Pole - mit je zumindest einem separaten Wechselstrombus eines jeweiligen Pols elektrisch verbunden ist oder sind. Der Strombegrenzer wäre demnach ebenfalls separat zu den Wechselstrombussen der beiden Pole ausgeführt, wobei die Verwendung eines separaten Strombegrenzers die Nutzung von am Markt erhältlichen Strombegrenzern ermöglicht. Dies erspart insbesondere den Aufwand für eine spezifische, angepasste Ausführung eines Strombegrenzers und den damit verbundenen Kosten.

Darüber hinaus ist es in einer sich hiervon unterscheidendenden Ausführungsform der Erfindung als vielversprechend anzusehen, wenn der oder die Strombegrenzer - zur elektrischen Verbindung der Pole - als wenigstens ein Element, ein Bestandteil und/oder Abschnitt eines einzigen, die Pole elektrisch verbindenden Wechselstrombusses ausgeführt ist oder sind. So könnten etwa eine oder mehrere Stromschienen, im Wechselstrombus vorgesehene Drosseln und/oder Transformatoren als Strombegrenzer, insbesondere als supraleitender Strombegrenzer, ausgebildet sein. Durch die Ausführung des Strombegrenzers oder der Strombegrenzer als Element, Bestandteil und/oder Abschnitt des Wechselstrombusses ließe sich vorteilhaft eine spezifische, angepasste Ausgestaltung des Strombegrenzers bereitstellen, welche beispielsweise auf eine geringe Bauraumverfügbarkeit, z. B. auf einer Offshore-Plattform, abgestimmt ist.

Insbesondere im vorstehenden Zusammenhang lässt sich somit auch eine Weiterbildung der Erfindung als Erfolg versprechend ansehen, bei der der Strombegrenzer ein supraleitender Strombegrenzer respektive ein supraleitender Fehlerstrombegrenzer ist, welche ferner auch als Superconducting Fault Current Limiter oder SFCL bekannt sind. Diese weisen hierbei vorteilhaft eine weitgehend hohe Verfügbarkeit auf und genügen der Anforderung an die Strombegrenzung auf einen maximal zulässigen Kurzschlussstrom im insbesondere zweistelligen Kiloampere-Bereich. Ein solcher maximal zulässiger Kurzschlussstrom kann z. B. im Bereich zwischen 20 Kiloampere und 50 Kiloampere liegen und/oder insbesondere 31,5 Kiloampere betragen.

Im Speziellen liegt eine vorteilhafte Ausführung des supraleitenden Strombegrenzers des erfindungsgemäßen elektrischen Netzwerks ferner darin, dass dieser ein resistiver supraleitender Strombegrenzer und/oder ein induktiver supraleitender Strombegrenzer ist. Neben resistiven und/oder induktiven könnten auch Brücken- oder Mischtypen von supraleitenden Strombegrenzern eingesetzt werden, welche beispielsweise über Dioden und Thyristoren sowie Stromdrosseln verfügen.

Im Gegensatz zu der Ausführung des Strombegrenzers als supraleitendem Strombegrenzer würde eine weitere Ausgestaltungsform der Erfindung vorsehen, dass der Strombegrenzer ein nicht-supraleitender Strombegrenzer ist. Hierbei kann der nicht-supraleitende Strombegrenzer beispielsweise ein Halbleiterstrombegrenzer und/oder ein induktiver Strombegrenzer sein. Durch die Verwendung nicht-supraleitender Strombegrenzer ließe sich ein Bereitstellen einer Kühllösung für supraleitende Strombegrenzer kostenminimierend und somit gewinnbringend vermeiden. Ein solcher nicht-supraleitender Strombegrenzer wäre darüber hinaus ebenfalls derart ausgelegt, dass dieser der Anforderung an die Strombegrenzung auf einen maximal zulässigen Kurzschlussstrom im insbesondere zweistelligen Kiloampere-Bereich genügt. Ein solcher maximal zulässiger Kurzschlussstrom kann wiederum z. B. im Bereich zwischen 20 Kiloampere und 50 Kiloampere liegen und/oder insbesondere 31,5 Kiloampere betragen.

In praxisgerechter Ausgestaltung der Erfindung ist die elektrische Verbindung und dabei eine Schnittstelle zwischen jedem Wechselstromnetzabschnitt und dem Gleichstromnetzabschnitt je Pol durch einen Hochspannungsgleichstromübertragungs(HGÜ)-Stromrichter ausgebildet. Dabei kann das elektrische Netzwerk weiterbildend zudem vorgesehen sein, dass das HGÜ-System im Gleichstromnetzabschnitt wenigstens einen Bypass zur Überbrückung zumindest eines HGÜ-Stromrichters aufweist. Der HGÜ-Stromrichter wäre hierbei insbesondere Teil einer Hochspannungsgleichstromübertagungs(HGÜ)-Umspannstation, wobei der Bypass vorteilhaft dazu beiträgt, dass bei einem Fehler respektive einer Wartung eines der Pole, z. B. wenigstens eines HGÜ-Stromrichters eines Pols, eine Übertragung respektive Verteilung von elektrischer Energie über den elektrischen Leiter dieses Pols sowie den weiteren, nicht vom Fehler oder der Wartung betroffenen Pol erfolgen kann. So ließe sich die Übertragung wenigstens zu 50 Prozent und somit ohne vollständige Unterbrechung aufrechterhalten. Der HGÜ-Stromrichter kann hierbei einerseits als ein netzgeführter Stromrichter respektive ein Line-Commutated-Converter (LLC) ausgeführt sein. Bevorzug ist der HGÜ-Stromrichter jedoch als selbstgeführter Stromrichter respektive als Voltage-Source-Converter (VSC) ausgestaltet, wobei der HGÜ-Stromrichter dabei besonders bevorzugt ein modularer Multilevel-Umrichter oder ein Modular-Multi-Level-Converter (MMC) ist.

Vor allem im Zusammenhang mit der vorgenannten Ausgestaltung ist eine mit Vorteil behaftete Ausführungsform der Erfindung zudem dadurch zu erkennen, dass der Bypass Teil einer Hochspannungsgleichstromübertragungs(HGÜ)-Umspannstation und/oder eines Hochspannungsgleichstromübertragungs(HGÜ)-Stromrichters selbst ist. So müsste in vorteilhafter Weise keine zusätzliche Verbindung des Bypasses mit einem elektrischen Leiter eines Pols sowie eines die Pole im Gleichstromnetzabschnitt verbindenden Leiterzweigs etabliert werden. Bevorzugt ist hierbei eine parallele Verschaltung des Bypasses innerhalb der Hochspannungsgleichstromübertragungs(HGÜ)-Umspannstation und/oder des Hochspannungsgleichstromübertragungs(HGÜ)-Stromrichters vorgesehen.

Eine hiervon abweichende, jedoch nicht minder vielversprechende Weiterbildung der Erfindung ist hingegen derart ausgestaltet, dass der Bypass parallel zu einer Hochspannungsgleichstromübertragungs(HGÜ)-Umspannstation und/oder zu einem Hochspannungsgleichstromübertragungs(HGÜ)-Stromrichter verschaltet und dabei direkt mit den - beiden - mit der HGÜ-Umspannstation und/oder dem HGÜ-Stromrichter elektrisch verbundenen Leiterzweigen des Gleichstromnetzabschnitts elektrisch verbunden ist. Der Bypass wäre folglich nicht Teil einer Hochspannungsgleichstromübertragungs(HGÜ)-Umspannstation und/oder eines Hochspannungsgleichstromübertragungs(HGÜ)-Stromrichters selbst, sondern separat zu dieser oder diesem ausgestaltet. Zur Ausgestaltung des Bypasses wäre es dabei denkbar, weitere Schaltereinrichtungen in die Leiterzweige einzubringen.

Grundsätzlich besteht die Möglichkeit, dass der Strombegrenzer und/oder eine den Strombegrenzer aufweisende Hochspannungsgleichstromübertragungs(HGÜ)-Umspannstation Teil eines künstlichen oder natürlichen Gebildes und somit insbesondere an, auf oder in dem Gebilde angeordnet ist, wobei das Gebilde den Strombegrenzer und/oder die den Strombegrenzer aufweisende Hochspannungsgleichstromübertragungs(HGÜ)-Umspannstation an einer bestimmten Position im Küstenvorfeld eines Meeres fixiert. Ein solches Gebilde könnte somit eine natürliche oder künstliche Insel oder aber auch eine Unterwasserstation sein.

In einer solchen überaus nutzbringenden Gestaltungsform des erfindungsgemäßen elektrischen Netzwerks ist zudem angedacht, dass der Strombegrenzer und/oder eine den Strombegrenzer aufweisende Hochspannungsgleichstromübertagungs(HGÜ)-Umspannstation als Bestandteil einer und/oder als eine Hochspannungsgleichstromübertragungs(HGÜ)-Umspannplattform ausgeführt ist. Der oder die Strombegrenzer und/oder die HGÜ-Umspannstation wären somit auf einer Offshore-Plattform, also einer im Küstenvorfeld eines Meeres errichteten Plattform, ausgeführt, sodass sich auch wenigstens ein im Küstenvorfeld eines Meeres angeordnetes Kraftwerk respektive wenigstens eine Erzeugungseinheit, insbesondere jedoch eine Gesamteinrichtung zur Stromerzeugung, hier ein Offshore-Windpark, in das elektrische Netzwerk integrieren und mit dem HGÜ-System elektrisch verbinden ließe.

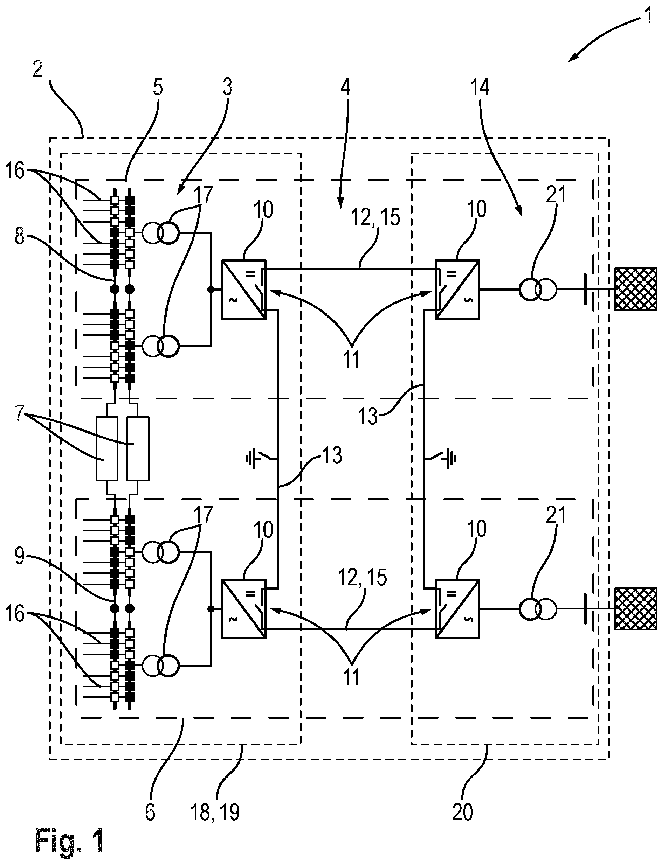

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Weiterbildung eines erfindungsgemäßen elektrischen Netzwerks in schematischer Darstellung.

Figur 1 zeigt eine Weiterbildung des elektrischen Netzwerks 1, wobei das elektrische Netzwerk 1 das zur bipolaren Hochspannungsgleichstromübertragung von elektrischer Energie eingerichtete Hochspannungsgleichstromübertragungs(HGÜ)-System 2 aufweist. Das HGÜ-System 2 umfasst dabei die zwei Wechselstromnetzabschnitte 3, 14, hierbei den ersten Wechselstromnetzabschnitt 3 sowie den zweiten Wechselstromnetzabschnitt 14 sowie den Gleichstromnetzabschnitt 4, wobei die beiden Wechselstromnetzabschnitte 3, 14 elektrisch über den Gleichstromnetzabschnitt 4 verbunden sind. Aufgrund der bipolaren Ausführung des HGÜ-Systems 2 ist im HGÜ-System 2 zudem dessen erster Pol 5 sowie dessen zweiter Pol 6 ausgebildet.

Die beiden je Pol 5, 6 vorliegenden Schnittstellen zwischen den Wechselstromnetzabschnitten 3, 14 und dem Gleichstromnetzabschnitt 4 werden dabei durch die Hochspannungsgleichstromübertragungs(HGÜ)-Stromrichter 10 gebildet. Zumindest umfasst ein jeweiliger Pol 5, 6 neben den beiden HGÜ-Stromrichtern 10 ferner einen den Leiterzweig 12 zwischen den beiden HGÜ-Stromrichtern 10 je Pol 5, 6 bildenden und somit die beiden HGÜ-Stromrichter 10 elektrisch verbindenden elektrischen Leiter 15 sowie jeweils einen im ersten Wechselstromnetzabschnitt 3 separat und über wenigstens eine Sammelschiene ausgeführten Wechselstrombus 8, 9, über welchen der jeweilige Pol 5, 6 mit einem Wechselstrom, insbesondere einem Dreiphasenwechselstrom, speisbar ist.

Hierfür stellt jeder Wechselstrombus 8, 9 mehrere Netzanschlusspunkte 16 bereit, über welche mehrere Kraftwerke mit einem jeweiligen Wechselstrombus 8, 9 elektrisch verbindbar sind. In dieser Weiterbildung des elektrischen Netzwerks 1 sind die Kraftwerke als nicht näher dargestellte Windkraftanlagen ausgeführt, wobei diese Windkraftanlagen im Küstenvorfeld eines Meeres und somit als Offshore-Windkraftanlagen angeordnet sind.

In dieser Weiterbildung ist der jeweilige Wechselstrombus 8, 9 je Pol 5, 6 zudem über zwei Transformatoren 17 mit einem HGÜ-Stromrichter 10 elektrisch verbunden.

Da die einen jeweiligen Pol 5, 6 über die Wechselstrombusse 8, 9 speisenden Windkraftanlagen aufgrund sich unterscheidender Umweltverhältnisse eine unterschiedliche Leistungsbereitstellung aufweisen können, sind die Pole 5, 6 zum Potentialausgleich zudem über die beiden im ersten Wechselstromnetzabschnitt 3 ausgeführten und parallel zueinander verschalteten Strombegrenzer 7 miteinander elektrisch verbunden, wodurch sich im Gleichspannungsnetzabschnitt 4 eine im Wesentlichen symmetrische Spannung der Pole 5, 6 gegenüber einem Null- respektive Erdpotential einstellt, sodass auch das Mittenpotential auf Null- respektive Erdpotential liegt. Die Verbindung der Pole 5, 6 erfolgt hierbei durch das Verbinden der Strombegrenzer 7 mit den jeweiligen, separaten Wechselstrombussen 8, 9 der Pole 5, 6. Aufgrund der über die Strombegrenzer 7 eingestellten symmetrischen Spannung der Pole 5, 6 weist das das HGÜ-System 2 im Gleichstromnetzabschnitt 4 zwischen den beiden, die Pole 5, 6 über jeweils zwei HGÜ-Stromrichter 10 elektrisch verbindenden, Leiterzweigen 13 in vorteilhafter Weise auch keinen dedizierten metallischen Rückleiter auf, wobei die Leiterzweige 13 trotz dessen zusätzlich erdbar ausgeführt sind.

Damit bei einem Fehler respektive einer Wartung eines der Pole 5, 6, z. B. wenigstens eines HGÜ-Stromrichters 10 eines Pols 5, 6, eine Übertragung respektive Verteilung von elektrischer Energie über den elektrischen Leiter 15 dieses Pols 5, 6 sowie den weiteren, nicht vom Fehler oder der Wartung betroffenen Pol 5, 6 erfolgen kann, weist das HGÜ-System 2 im Gleichstromnetzabschnitt 4 zudem mehrere, hierbei vier Bypässe 11 zur Überbrückung jedes der HGÜ-Stromrichter 10 auf. Der jeweilige Bypass 11 ist dabei Teil des HGÜ-Stromrichters 10 selbst.

Wie zuvor dargelegt, sind die in dieser Weiterbildung des elektrischen Netzwerks 1 die Pole 5, 6 über die Wechselstrombusse 8, 9 speisenden Kraftwerke Offshore-Windkraftanlagen, sodass die der Hochspannungsgleichstromübertragungs(HGÜ)-Umspannstation 18 zugehörigen Wechselstrombusse 8, 9, die Strombegrenzer 7, die Transformatoren 17 sowie die mit den Transformatoren 17 verbundenen und die Schnittstelle zwischen dem ersten Wechselstromnetzabschnitt 3 und dem Gleichstromnetzabschnitt 4 bildenden HGÜ-Stromrichter 10 als Bestandteile der im Küstenvorfeld eines Meeres angeordneten Hochspannungsgleichstromübertragungs(HGÜ)-Umspannplattform 19 ausgeführt sind. Die elektrischen Leiter 15 sind ferner als Seekabel ausgeführt, welche die HGÜ-Umspannplattform 19 mit der an Land, also onshore angeordneten HGÜ-Umspannstation 20 verbinden, welche neben den die Schnittstelle zwischen dem Gleichstromnetzabschnitt 4 und dem zweiten Wechselstromnetzabschnitt 14 bildenden HGÜ-Stromrichtern 10 zudem die mit den HGÜ-Stromrichtern 10 jeweils elektrisch verbundenen Transformatoren 21 aufweist.

### BEZUGSZEICHENLISTE

- 1: elektrisches Netzwerk
- 2: Hochspannungsgleichstromübertragungs-System
- 3: Wechselstromnetzabschnitt
- 4: Gleichstromnetzabschnitt
- 5: erster Pol

- 6: zweiter Pol
- 7: Strombegrenzer
- 8: Wechselstrombus
- 9: Wechselstrombus
- 10: Hochspannungsgleichstromübertragungs-Stromrichter

- 11: Bypass
- 12: Leiterzweig
- 13: Leiterzweig
- 14: Wechselstromnetzabschnitt
- 15: elektrischer Leiter

- 16: Netzanschlusspunkte
- 17: Transformator
- 18: Hochspannungsgleichstromübertragungs-Umspannstation
- 19: Hochspannungsgleichstromübertragungs-Umspannplattform
- 20: Hochspannungsgleichstromübertragungs-Umspannstation

- 21: Transformator

## Patentansprüche

1. Elektrisches Netzwerk (1), mit einem zur bipolaren Hochspannungsgleichstromübertragung von elektrischer Energie eingerichteten Hochspannungsgleichstromübertragungs-System (2), wobei das Hochspannungsgleichstromübertragungs-System (2) wenigstens einen Wechselstromnetzabschnitt (3) und einen mit dem Wechselstromnetzabschnitt (3) elektrisch verbundenen Gleichstromnetzabschnitt (4) umfasst und das bipolare Hochspannungsgleichstromübertragungs-System (2) mit einem ersten Pol (5) sowie einem zweiten Pol (6) ausgeführt ist, **dadurch gekennzeichnet, dass** die Pole (5, 6) über zumindest einen in dem Wechselstromnetzabschnitt (3) ausgeführten Strombegrenzer (7) miteinander elektrisch verbunden sind.

2. Elektrisches Netzwerk (1) nach Anspruch 1, **dadurch gekennzeichnet, dass** das Hochspannungsgleichstromübertragungs-System (2) keinen dedizierten metallischen Rückleiter aufweist.

3. Elektrisches Netzwerk (1) nach Anspruch 1 oder 2, **dadurch gekennzeichnet, dass** im Wechselstromnetzabschnitt (3) des Hochspannungsgleichstromübertragungs-Systems (2) je Pol (5, 6) wenigstens ein Wechselstrombus (8, 9) ausgeführt ist, über welchen der jeweilige Pol (5, 6) mit einem Wechselstrom speisbar ist.

4. Elektrisches Netzwerk (1) nach zumindest einem der vorhergehenden Ansprüche, **dadurch gekennzeichnet, dass** der oder die Strombegrenzer (7) mit je zumindest einem separaten Wechselstrombus (8, 9) eines jeweiligen Pols (5, 6) elektrisch verbunden ist oder sind.

5. Elektrisches Netzwerk (1) nach zumindest einem der vorhergehenden Ansprüche, **dadurch gekennzeichnet, dass** der oder die Strombegrenzer (7) als wenigstens ein Element, ein Bestandteil und/oder Abschnitt eines einzigen die Pole (5, 6) elektrisch verbindenden Wechselstrombusses ausgeführt ist oder sind.

6. Elektrisches Netzwerk (1) nach zumindest einem der vorhergehenden Ansprüche, **dadurch gekennzeichnet, dass** der Strombegrenzer (7) ein supraleitender Strombegrenzer (7) ist.

7. Elektrisches Netzwerk (1) nach zumindest einem der vorhergehenden Ansprüche, **dadurch gekennzeichnet, dass** der supraleitende Strombegrenzer (7) ein resistiver supraleitender Strombegrenzer (7) und/oder ein induktiver supraleitender Strombegrenzer (7) ist.

8. Elektrisches Netzwerk (1) nach zumindest einem der vorhergehenden Ansprüche, **dadurch gekennzeichnet, dass** der Strombegrenzer (7) ein nicht-supraleitender Strombegrenzer (7) ist.

9. Elektrisches Netzwerk (1) nach zumindest einem der vorhergehenden Ansprüche, **dadurch gekennzeichnet, dass** die elektrische Verbindung und dabei eine Schnittstelle zwischen jedem Wechselstromnetzabschnitt (3, 14) und dem Gleichstromnetzabschnitt (4) je Pol (5, 6) über einen Hochspannungsgleichstromübertragungs-Stromrichter (10) ausgebildet ist, wobei das Hochspannungsgleichstromübertragungs-System (2) im Gleichstromnetzabschnitt (4) wenigstens einen Bypass (11) zur Überbrückung zumindest eines Hochspannungsgleichstromübertragungs-Stromrichters (10) aufweist.

10. Elektrisches Netzwerk (1) nach zumindest einem der vorhergehenden Ansprüche, **dadurch gekennzeichnet, dass** der Bypass (11) Teil einer Hochspannungsgleichstromübertragungs-Umspannstation (18, 20) und/oder des Hochspannungsgleichstromübertragungs-Stromrichters (10) selbst ist.

11. Elektrisches Netzwerk (1) nach zumindest einem der vorhergehenden Ansprüche, **dadurch gekennzeichnet, dass** der Bypass (11) parallel und/oder separat zu einer Hochspannungsgleichstromübertragungs-Umspannstation (18, 20) und/oder einem Hochspannungsgleichstromübertragungs-Stromrichter (10) verschaltet und dabei direkt mit den mit der Hochspannungsgleichstromübertragungs-Umspannstation (18, 20) und/oder dem Hochspannungsgleichstromübertragungs-Stromrichter (10) elektrisch verbundenen Leiterzweigen (12, 13) des Gleichstromnetzabschnitts (4) elektrisch verbunden ist.

12. Elektrisches Netzwerk (1) nach zumindest einem der vorhergehenden Ansprüche, **dadurch gekennzeichnet, dass** der Strombegrenzer (7) und/oder eine den Strombegrenzer (7) aufweisende Hochspannungsgleichstromübertragungs-Umspannstation (18) als Bestandteil einer und/oder als eine Hochspannungsgleichstromübertragungs-Umspannplattform (19) ausgeführt ist.
